Europäisches Patentamt

European Patent Office

Office européen des brevets

(19)

(11) **EP 0 817 976 B1**

(12) **EUROPÄISCHE PATENTSCHRIFT**

(45) Veröffentlichungstag und Bekanntmachung des Hinweises auf die Patenterteilung:
**24.02.1999 Patentblatt 1999/08**

(21) Anmeldenummer: **96907287.5**

(22) Anmeldetag: **27.03.1996**

(51) Int Cl.6: **G01S 3/74**, G01S 3/46

(86) Internationale Anmeldenummer:
**PCT/DE96/00534**

(87) Internationale Veröffentlichungsnummer:
**WO 96/30777 (03.10.1996 Gazette 1996/44)**

(54) **VERFAHREN ZUM HOCHAUFLÖSENDEN AUSWERTEN VON SIGNALEN ZUR EIN- ODER ZWEIDIMENSIONALEN RICHTUNGS- ODER FREQUENZSCHÄTZUNG**

PROCESS FOR THE HIGH-RESOLUTION EVALUATION OF SIGNALS FOR ONE OR TWO-DIMENSIONAL DIRECTIONAL OR FREQUENCY ESTIMATION

PROCEDE D'EVALUATION HAUTE DEFINITION DE SIGNAUX AUX FINS DE L'ESTIMATION UNIDIMENSIONNELLE OU BIDIMENSIONNELLE DE LA DIRECTION OU DE LA FREQUENCE

(84) Benannte Vertragsstaaten:
**DE ES FR GB IT SE**

(30) Priorität: **30.03.1995 DE 19511752**

(43) Veröffentlichungstag der Anmeldung:
**14.01.1998 Patentblatt 1998/03**

(73) Patentinhaber: **SIEMENS AKTIENGESELLSCHAFT 80333 München (DE)**

(72) Erfinder: **HAARDT, Martin D-81477 München (DE)**

(56) Entgegenhaltungen:
**US-A- 4 750 147          US-A- 5 359 333**

- **PROCEEDINGS OF THE 1995 IEEE INTERNATIONAL CONFERENCE ON ACOUSTICS , SPEECH AND SIGNAL PROCESSING ICASSP 95 , Bd. 3, Nr. 20, 9. - 12.Mai 1995, DETROIT , MI , USA , Seiten 2096-9, XP002009163 MARTIN HAARDT , MICHAEL D. ZOLTOWSKI, CHERIAN P. MATHEWS UND JOSEF A. NOSSEK : "2D Unitary ESPRIT for efficient 2D parameter estimation "**
- **PROCEEDINGS OF THE 1994 IEEE INTERNATIONAL CONFERENCE ON ACOUSTICS , SPEECH AND SIGNAL PROCESSING ICASSP 94 , Bd. 4, Nr. 19, 19. - 22.April 1994, ADELAIDE , SA , AUSTRALIA , Seiten 229-32, XP002009164 MARTIN HAARDT UND MARKUS E. ALI-HACKL : "Unitary ESPRIT : how to exploit additional information inherent in the rotational invariance structure "**
- **CONFERENCE RECORD OF THE TWENTY-EIGHTH IEEE ASILOMAR CONFERENCE ON SIGNALS , SYSTEMS AND COMPUTERS , Bd. 1, Nr. 28, 30.Oktober 1994 - 2.November 1994, PACIFIC GROVE , CA , USA , Seiten 682-7, XP002009165 MICHAEL D. ZOLTOWSKI , MARTIN HAARDT UND CHERIAN P. MATHEWS : "Closed form 2D angle estimation with rectangular arrays via DFT beamspace ESPRIT "**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einerseits ein Verfahren zum hochauflösenden Auswerten und gegebenenfalls zur Signalwiedergewinnung empfangenen schmalbandigen Signalen zur ein oder zweidimensionalen Richtungsschätzung und andererseits ein Verfahren zum hochauflösenden Auswerten Überlagerter ungedämpfter harmonischer Signale zur ein oder zweidimensionalen Frequenzschätzung bei gegebenenfalls mehrkanaligen Beobachtungen.

Aus R.Roy und T.Kailath, "ESPRIT - Estimation of signal parameters via rotational invariance techniques', IEEE Trans. Acoust., Speech, Signal Processing, vol. ASSP-37, pp.984-995, Juli 1989 und A.L.Swindlehurst und T. Kailath, "Azimuth/elevation direction finding using regular array geometrics", IEEE Trans. Aerospace and Electronic Systems, Vol. 29, pp. 145-156, Januar 1993 sind ein- bzw. zweidimensionale Verfahren bekannt, um die Einfallsrichtung der verschiedenen Signale auszuwerten.

Aus R.Roy, A.Paulraj und T.Kailath, "ESPRIT - A subspace rotation approach to estimation of parameters of cisoids in noise", IEEE Trans. Acoustics, Speech, Signal Processing, Vol. ASSP-34, S.1340-1342, Oktober 1986 und M.P.Pepin und M.P.Clark, "on the performance of several 2-D harmonic retrieval techniques" in Proc. 28th Asilomar Conference on Signals, Systems and Computers", Pacific Grove, CA, November 1994 sind Verfahren zur eindimensionalen bzw. zweidimensionalen Frequenzschatzung bei einkanaligen Beobachtungen bekannt.

Die als ESPRIT Verfahren bekannten Verfahren zur Signalparameterschätzung durch Verschiebungsinvarianzen basierende Techniken (im folgenden als Standard ESPRIT Verfahren bezeichnet) sind aufgrund ihrer Einfachheit und ihres Auflösungsvermögens geeignet für eine Richtungs- oder Frequenzschätzung. Verschiebungsinvarianzen bedeuten bei einer Richtungsschätzung die geometrische Verschiebung identischer Sensoruntergruppen und bei einer Frequenzschätzung die zeitbezogene Verschiebung der in Untergruppen eingeteilten äquidistanten Abtastwerte. Jedoch sind beim Standard ESPRIT Verfahren durchgehend komplexe Berechnungen mit relativ hohem Rechenaufwand erforderlich. Auch verliert das Standard ESPRIT Verfahren mit steigender Korrelation zwischen den Signalen an Genauigkeit und ist bei kohärenten Signalen untauglich. Alle bekannten Verfahren zur hochauflösenden richtungsempfindlichen Auswertung von Signalen erfordern bei zweidimensionaler Richtungsauswertung rechenzeitaufwendige Optimierungs- oder Suchstrategien zur Zuordnung der in den zwei Dimensionen ermittelten Ortskoordinaten zu den Signalen. Zum weiteren kann die Zuverlässigkeit der bekannten Verfahren nicht abgeschätzt werden und damit auch keine automatische Verbesserung der Meßwertaufnahme bei ungenügender Zuverlässigkeit eingeleitet werden.

Eine Weiterbildung des Standard ESPRIT Verfahrens ist aus M. Haardt und M.E. Ali-Hackl, "Unitary ESPRIT - How to exploit additional information iherent in the rotational invariance structure", Proceedings of the 1994 International Conference on Acoustics, Speech and Signal Processing ICASSP 94, 19.-22. April 1994, Seiten 229-232 bekannt.

Der Richtungsauswertung erschließt sich mit dem Mobilfunk oder mobilfunkähnlichen Verfahren ein neues Anwendungsgebiet. Signale unterliegen bei ihrer Ausbreitung in einem Ausbreitungsmedium Störungen durch Rauschen. Durch Beugungen und Reflexionen durchlaufen Signalkomponenten verschiedene Ausbreitungswege und überlagern sich beim Empfänger und führen dort zu Auslöschungseffekten. Zum weiteren kommt es bei mehreren Signalquellen zu Überlagerungen dieser Signale. Unter anderen Verfahren dienen Frequenzmultiplex-, Zeitlagenmultiplex oder ein als Code Division Multiplex bekanntes Verfahren zur Erleichterung der Unterscheidung der Signalquellen und damit zur Auswertung der Signale.

Der Erfindung liegt die Aufgabe zugrunde, ein Verfahren zum hochauflösenden Auswerten von Signalen zur ein- oder zweidimensionalen Richtungs- oder Frequenzschätzung anzugeben, das mit reduziertem Rechenaufwand bzw. erhöhter Auflösegenauigkeit durchführbar ist. Diese Aufgabe wird durch das Verfahren zum hochauflösenden Auswerten von Signalen zur ein- oder zweidimensionalen Richtungs- oder Frequenzschätzung nach Anspruch 1 gelöst. Das Verfahren nach der Erfindung läßt sich als Unitary ESPRIT (Estimation of signal parameters via rotational invariance techniques) Verfahren bezeichnen.

Ein wesentlicher Aspekt der Erfindung ist darin zu sehen, daß ein zentro-symmetrisches Datenmodell gewählt wird, welches durch eine zentro-symmetrische Sensorgruppe für die Richtungsschätzung und die äquidistante Abtastung bei der Frequenzschätzung erzielt wird. Die Eigenschaft von zentro-symmetrischen Sensorgruppen mit Invarianzstruktur, daß sie eine zentro-symmetrische Systemmatrix haben und die Phasenfaktoren der Einfallsrichtungen der Signale auf dem Einheitskreis befindlich sind, wird bei der Richtungsschätzung ausgenutzt. Durch das zentro-symmetrische Datenmodell kann eine Rechnung mit überwiegend reellen Werten erfolgen.

Das Verfahren kann in einer oder zwei Auswertedimensionen eingesetzt werden. Die Auswertedimensionen beziehen sich bei der Richtungsschätzung der einfallenden Wellenfronten auf die ein oder zwei Winkel der Einfallsrichtung. Bei der Frequenzschätzung beziehen sich die Auswertedimensionen auf die Dimensionen in denen die Frequenz geschätzt werden soll (1 Zeit- und 1 Raumdimension oder 2 Raumdimensionen). Ein Algorithmus zur Durchführung des Auswerteverfahrens kann sowohl für eindimensionale, als auch für zweidimensionale Sensoranordnungen in geschlossener Form angegeben werden. Such- oder Optimierungsaufgaben mit hohem Rechenaufwand, die gewöhnlich für Berechnungen bei zweidimensionalen Sensoranordnungen nötig sind, werden vermieden. Im Vergleich zu Standard ESPRIT ist beim Auswerten von unkorrelierten Signalen bzw. Signalkomponenten nur die Hälfte der Abtastwerte für die gleiche Genauigkeit nötig. Die genannten Vorteile des geschlossenen Algorithmus führen zu Rechenzeiteinsparungen und damit zu einer besseren Eignung des erfindungsgemäßen Verfahrens für Echtzeitaufgaben.

Bei eindimensionalen Verfahren ist eine rein reelle Rechnung und ein Zuverlässigkeitstest der ermittelten Lösungen möglich. Beim zweidimensionalen Verfahren ergibt sich der Vorteil einer gewonnenen geschlossenen Lösungsvorschrift, die durch eine automatische Paarung - der einzigen komplexen Rechnung - der in den zwei Dimensionen ermittelten Lösungen ermöglicht wurde.

Die Genauigkeit der Bestimmung der Einfallsrichtung für miteinander korrelierte Signale wird durch das erfindungsgemäße Verfahren verbessert.

Weitere vorteilhafte Ausbildungen der Erfindung sind in den weiteren Unteransprüchen angegeben.

Ein Ausführungsbeispiel des erfindungsgemaßen Verfahren wird im folgenden anhand von Figuren erläutert.

Figur 1     zeigt eine Auswerteeinrichtung zur Durchführung des erfindungsmaßen Verfahrens zum hochauflösenden Auswerten schmalbandiger Signale in einem Mobilfunkszenarium mit Mehrwegeausbreitung.

Figur 2     zeigt unter a bis e ein- und zweidimensionale zentro-symmetrische Sensorgruppen zum Empfang schmalbandiger Signale, sowie Beispiele zur Untergruppenbildung.

Figur 3     zeigt unter a eine eindimensionale und unter b eine zweidimensionale Sensorgruppe mit einfallenden Wellenfronten verschiedener Signale bzw. Signalkomponenten und den dazugehörigen Einfallswinkeln.

Figur 4     zeigt einen Vergleich der Auswerteergebnisse des Standard ESPRIT (4a) und des erfindungsgemaßen Unitary ESPRIT Verfahrens (4b) von drei miteinander korrelierten Signalen in einer Darstellung der Phasenfaktoren auf dem Einheitskreis nach 80 Testläufen, wobei die unzuverlässigen Lösungen des Unitary ESPRIT Verfahrens mit einer Kennzeichnung $\oplus$ versehen sind.

Figur 5     gibt in schematischer Darstellung ein empfangenes Signal mit anschließender Frequenz zerlegung für das erfindungsgemäße Verfahren zur Frequenzschatzung an.

In einer am Ende der Beschreibunb angefügten Tabelle sind Bedingungen und vorteilhafte Auswirkungen des erfindungsgemäßen Verfahrens angegeben.

Das erfindungsgemäße Verfahren kann dazu angewandt werden, um aus empfangenen schmalbandigen Signalen Informationen zur Richtung der einfallenden Wellenfronten der Signale zu gewinnen; in diesem Fall kann es sich auch um ein einzelnes Signal mit verschiedenen Signalkomponenten, unter Störungen oder auch ungestört, handeln. Andererseits kann das erfindungsgemäße Verfahren auch zur Gewinnung der Zusammensetzung der einfallenden Signale nach harmonischen Frequenzanteilen eingesetzt werden.

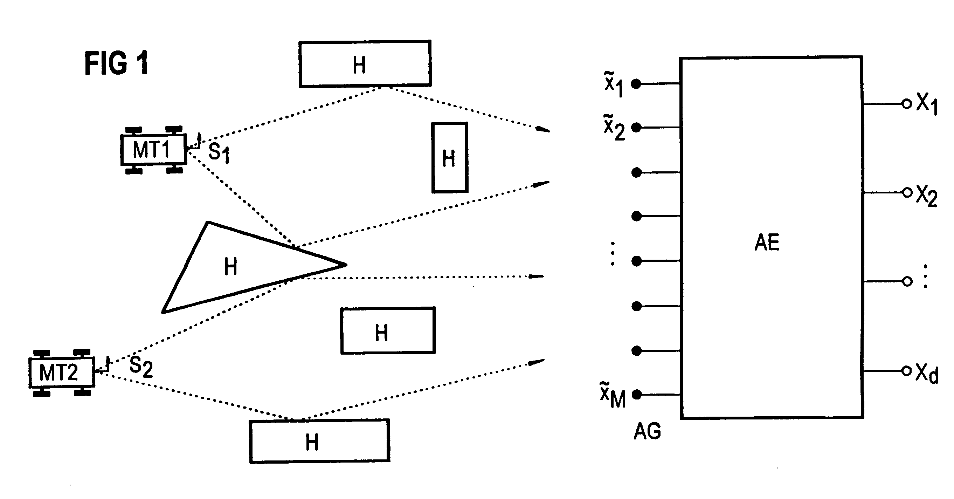

Das **Verfahren zur Richtungsschätzung** wird im weiteren beispielhaft anhand der Figuren 1 bis 4 erläutert.

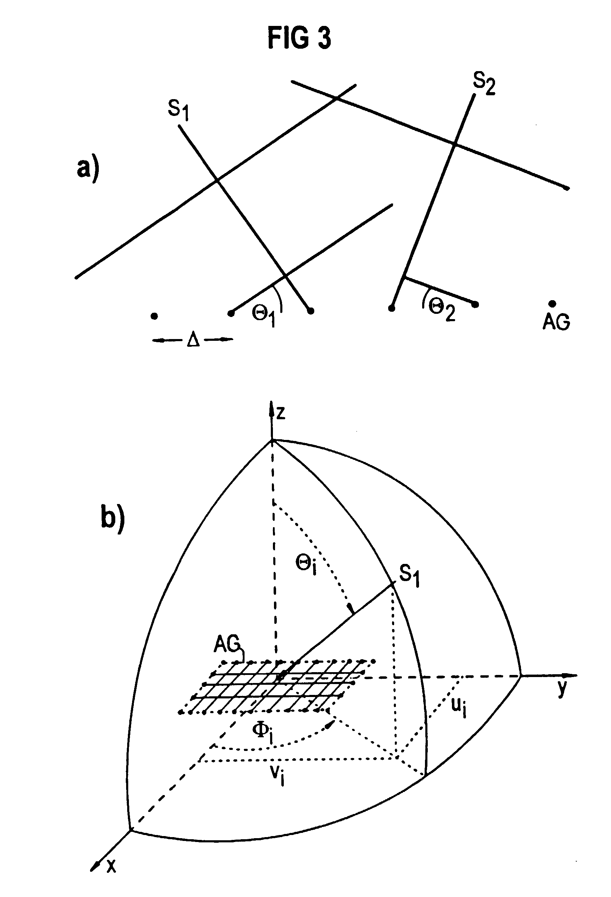

Die Sensorgruppe besteht aus M Elementen. Es kann sich um eine eindimensionale Sensorgruppe oder um eine flächenhafte zweidimensionale Sensorgruppe. Die im Ausführungsbeispiel gewählte Sensorgruppe ist eine uniforme lineare Antennengruppe AG mit einem Elementeabstand kleiner oder gleich der halben Wellenlänge $\lambda$. Wie aus Figur 3 ersichtlich treffen die Wellenfronten der Signale bzw. Signalkomponenten jeweils mit einem Winkel $\theta_k$ auf die eindimensionale Antennengruppe auf. Die Fensterlänge N wird dabei so gewählt, daß der Einfallswinkel $\theta_k$ während der Abtastungen einer Fensterlänge N als konstant angesehen werden können. Die Richtungsauswertung beruht auf dem Umstand, daß ein Signal zeitlich verzögert bei den verschiedenen Antennenelementen eintrifft. Zwischen den Abtastwerten eines Signals an den verschiedenen Antennenelementen besteht damit eine Phasenverschiebung, die eine Funktion der Einfallsrichtung $\theta_k$ ist. Mit der Ermittlung der Phasenverschiebung ist die Bestimmung der Einfallsrichtung $\theta_k$ des Signals möglich. Bei zweidimensionalen Sensorgruppen werden die Einfallsrichtungen nach Azimut- und Elevationswinkel ausgewertet. Die Richtungsbestimmung geht davon aus, daß alle Signalkomponenten die gleiche Trägerfrequenz haben.

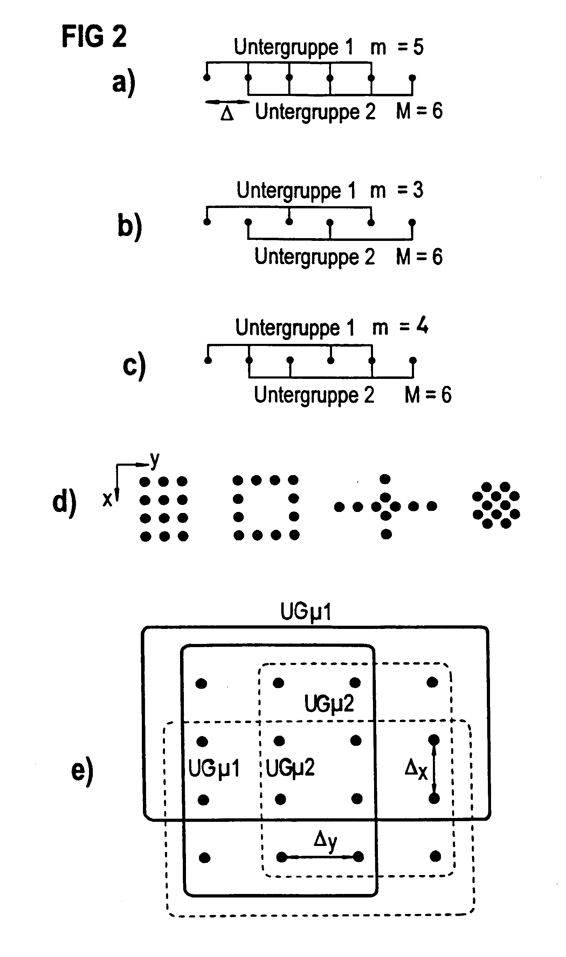

Die Konfiguration einer für das erfindungemäße Verfahren zur Richtungsschätzung eingesetzten Sensorgruppe ist jedoch einer Bedingung unterworfen. Die Sensorgruppe muß zentro-symmetrisch sein, d.h. die geometrische Anordnung der Elemente muß paarweise symmetrisch in Bezug auf einen Mittelpunkt sein und die komplexen Eigenschaften symmetrischer Sensorelemente müssen identisch sein - verschiedene Ausbildungsformen sind in Figur 2 angegeben. Zusätzlich muß eine eindimensionale Sensorgruppe in Richtung einer Ortskoordinate Invarianz aufweisen und eine zweidimensionale Sensorgruppe diese Eigenschaften in zwei Richtungen, die nicht notwendigerweise zueinander orthogonal sein müssen, besitzen. Im weiteren wird folgende Notation verwendet: Spaltenvektoren bzw. Matrizen werden durch fettgedruckte Klein- bzw. Großbuchstaben gekennzeichnet; transponierte, konjugiert komplexe bzw. transjugierte Matrizen und Vektoren erhalten den Zusatz T, * bzw. H.

Die Systemmatrix **A** der Sensorgruppe ist zentro-symmetrisch und erfüllt damit bestimmte Bedingungen, die sich mit der Gleichung (1) beschreiben lassen

$$\Pi_M A^{\bullet} = A\Lambda \qquad A \in C^{Mxd}, \qquad (1)$$

wobei die komplexe Matrix $\Lambda$ eine unitäre Diagonalmatrix der Dimension d x d ist und d über eine Fensterlänge N zeitunabhängig die Anzahl der dominanten einfallenden Signalkomponenten angibt. $\Pi_M$ ist eine antidiagonale Permutationsmatrix der Dimension M. Es sei auch angemerkt, daß die Systemmatrizen der beiden zu bildenden Untergruppen der Sensorgruppe die Bedingung nach Gleichung (1) ebenfalls erfüllen müssen.

Zur Schmalbandigkeit der durch die zentro-symmetrische Sensorgruppe empfangenen Signale ist anzumerken, daß während der Ausbreitung der zu den Signalkomponenten zugehörigen Wellenfronten entlang der Antennenapertur keine merkliche Änderung der komplexen Hüllkurve der Signalkomponenten auftreten darf. Die Schmalbandigkeit kann auch durch eine schmalbandige Filterung der Empfangssignale erzwungen werden.

Die Anzahl der Abtastwerte N ist ebenfalls frei wählbar, wobei mit zunehmender Anzahl N der Abtastwerte die Schätzgenauigkeit steigt, jedoch auch die Dimension der durch die Anzahl der Elemente M und die Anzahl der Abtastwerte N bestimmten Meßwertmatrix $\tilde{X}$ ,

dabei gibt $\tilde{x}_i(k)$ mit (i=1,2..M) und (k=1,2..N) den k-ten Abtastwert des i-ten Sensors an und die Meßwertmatrix $\tilde{X}$ hat die Form:

$$\tilde{X} \in C^{MxN} = \begin{bmatrix} \tilde{x}_1(1) & \tilde{x}_1(2) & .. & \tilde{x}_1(N) \\ \tilde{x}_2(1) & \tilde{x}_2(2) & .. & \tilde{x}_2(N) \\ .. & .. & .. & .. \\ \tilde{x}_M(1) & \tilde{x}_M(2) & .. & \tilde{x}_M(N) \end{bmatrix} . \qquad (2)$$

Die Verarbeitung von Matrizen hoher Dimension ist aufwendiger als die von Matrizen kleinerer Dimension. Gleiches gilt auch für komplexe, durch Real- und Imaginärteil bestimmte Matrizen gegenüber reellen Matrizen. Ein geringer Verarbeitungsaufwand von Signalauswerteverfahren ist Voraussetzung für die Nutzung dieser Verfahren in Echtzeitsystemen.

Das Verfahren baut auf vorliegende, von der Antennengruppe AG empfangene und anschließend aufbereitete Meßwerte auf. In Figur 1 wird das Verfahren beispielhaft zum hochauflösenden Auswerten von schmalbandigen Signalen zur eindimensionalen Richtungsschätzung in einer Auswerteeinrichtung AE zur Ausführung gebracht. Anschließend können mit den ermittelten Einfallsrichtungen $\theta_k$ die Signalkomponenten $x_k$ zur Rekonstruktion der Wellenfronten separiert werden und die Quellensignale $s_1, s_2$ optimal rekonstruiert werden. Ebenso ist eine Richtungsortung der Signalquellen $s_1, s_2$ möglich. Eine Generierung von Sendesignale ist ebenso möglich, die die Ausbreitungsbedingungen durch Auswertung der empfangenen Signale berücksichtigt.

In der in Figur 1 dargestellten Einsatzumgebung des erfindungsgemäßen Verfahrens sind die Signale $s_1, s_2$ beispielweise in einem Mobilfunkszenariums (Mobilteile MT1, MT1) mit Mehrwegeausbreitung durch Beugung und Brechung an Hindernissen H und somit einer Aufsplitterung in verschiedene Signalkomponenten $x_k$ unterworfen. Signalkomponenten $x_k$ verschiedener Signale $s_1, s_2$ treffen bei der Antennengruppe AG ein. Neben einem Antennenelement enthält jeder Sensor eine Einrichtung zur Umwandlung des mit dem Antennenelement empfangenen Hochfrequenz-Signals bzw. der -Signalkomponente in ein komplexes Basisbandsignal, das dann abgetastet wird. Die weitere im folgenden beschriebene Auswertung der komplexen Basisbandsignale erfolgt in der Auswerteeinrichtung AE.

Als erster Verfahrensschritt werden die Abtastwerte $\tilde{x}_i(k)$ für jedes Antennenelement in der gleichen Reihenfolge in die Meßwertmatrix $\tilde{X}$ eingelesen. Sollte nur ein Abtastwert $\tilde{x}_i(k)$ zur Verfügung stehen, muß sich eine räumliche Glättung der Abtastwerte $\tilde{x}_i(k)$ anschließen. Für eine Frequenzschätzung mit nur einem Sensorelement ware eine äquivalente Glättung nötig. Diese Glättung kann dem Verfahren jedoch in jedem Fall vorausgehen. Aus B.Widrow et al, "Signal Cancellation Phenomena in Adaptive Antennas: Causes and Cures", in IEEE Trans. on Antennas and Propagation, Vol. AP-30, S. 469-478, Mai 1982 und S.C.Pei et al, "Modified Spatial Smoothing for Coherent Jammer Suppression without Signal Cancellation", in IEEE Trans. on Acoustics, Speech and Signal Processing', Vol. ASSP-36, S. 412-414. März 1988 sind Verfahren zur räumlichen Glättung bekannt. Bei der räumlichen Glättung werden Sensorgruppen in mehrere Untergruppen unterteilt und die abgetasteten Meßwerte vorgemittelt, so daß auch eine der Anzahl der gebildeten Untergruppen entsprechende Anzahl von kohärenten Signalen bzw. Signalkomponenten $x_k$ gleichzeitig detektiert werden kann, wenn sie aus verschiedenen Richtungen einfallen. Beim erfindungsgemäßen Verfahren kann nach räumlicher Glättung eine der doppelten Anzahl der gebildeten Untergruppen entsprechende Anzahl von kohärenten Signalen bzw. Signalkomponenten $x_k$ gleichzeitig detektiert werden.

Die komplexe Meßwertmatrix $\tilde{x}$ wird nach der Initialisierung in eine zweite, rein reelle Matrix $T(\tilde{X})$ nach Gleichung (3) überführt:

$$T(\bar{X}) = Q_M^H \begin{bmatrix} \bar{X} & \Pi_M \bar{X}^* \Pi_N \end{bmatrix} Q_{2N} . \tag{3}$$

Die Matrizen $Q_M^H$ und $Q_{2N}$ sind als unitare, links $\Pi$-reelle Matrizen, die nach Gleichung (4) und (5) gewählt werden:

$$Q_{2m} = \frac{1}{\sqrt{2}} \begin{bmatrix} I_m & jI_m \\ \Pi_m & -j\Pi_m \end{bmatrix} \quad \text{für Matrizen gerader Ordnung} \tag{4}$$

bzw.

$$Q_{2m+1} = \frac{1}{\sqrt{2}} \begin{bmatrix} I_m & 0 & jI_m \\ 0^T & \sqrt{2} & 0^T \\ \Pi_m & 0 & -j\Pi_m \end{bmatrix} \quad \text{für ungeradzahlige Matrizen} \tag{5}$$

($I_m$ ist eine n-dimensionale Einheitsmatrix, $\Pi_n$ ist eine n-dimensionale antidiagonale Permutationsmatrix).

Eine links n-reelle Matrix genügt generell der Bedingung $\Pi_p Q^* = Q$ mit $Q \in C^{p \times q}$. $\Pi_p$ ist eine antidiagonale Permutationsmatrix mit $\Pi_p \in R^{p \times q}$.

Diese allgemeine Form der Gleichung (3) läßt sich so zu Gleichung (6) vereinfachen,

$$T(\bar{X}) = \begin{bmatrix} \mathbf{Re}(Z_1 + \Pi Z_2^*) & -\mathbf{Im}(Z_1 - \Pi Z_2^*) \\ \sqrt{2} \cdot \mathbf{Re}(z^T) & -\sqrt{2} \cdot \mathbf{Im}(z^T) \\ \mathbf{Im}(Z_1 + \Pi Z_2^*) & \mathbf{Re}(Z_1 - \Pi Z_2^*) \end{bmatrix}, \tag{6}$$

wenn die komplexe Meßwertmatrix $\tilde{x}$ dazu in zwei gleich große Untermatrizen $(Z_1, Z_2)$ aufgeteilt wird:

$$\bar{X} = \begin{bmatrix} Z_1 \\ z^T \\ Z_2 \end{bmatrix} . \tag{7}$$

Für eine gerade Anzahl von Sensorelementen M kann die Mittelzeile entfallen, ansonsten gibt $z^T$ den Zeilenvektor der zentralen Zeile an.

Die zweite, rein reelle Matrix $T(\tilde{X})$ hat die Dimension M x 2N, sie schafft somit eine Verdopplung der zur Verfügung stehenden Matrixelemente allein durch wenig aufwendige Rechenoperationen. Die Verdopplung der Di-

mension der Meßwertmatrix $\tilde{X}$ schafft eine dem Verfahren inhärente Vorwärts-Rückwärtsmittelung der Meßwerte.

Als folgender Verfahrensschritt wird eine Signalunterraumschätzung durchgeführt. Dazu einsetzbare Verfahren sind in A.J.Van der Veen, E.F.Deprettere und A.L.Swindlehurst, "Subspace-based signal analysis using singular value decomposition", Proc. IEEE, Vol. 81, S. 1277-1308, September 1993 näher erläutert. Aus der zweiten, rein reellen Matrix $T(\tilde{X})$ wird eine Signalunterraummatrix $E_S$ mit der Dimension (Mxd) gewonnen, deren d Spalten den d-dimensionalen Signalunterraum aufspannen. Entspricht die Anzahl der Abtastwerte N nicht der Anzahl d der dominanten Signalkomponenten $x_k$, dann findet dadurch eine Rangreduzierung statt. Die Anzahl d der dominanten Signalkomponenten $x_k$ kann a priori bekannt sein und damit dem Verfahren zur Verfügung stehen oder sie wird in diesem Verfahrensschritt bestimmt. Die Bestimmung der d dominanten die dominanten Signalkomponenten $x_k$ repräsentierenden Singulär- oder Eigenwerte kann durch Auswahl der sich über einem durch eine starke Leistungsdifferenz repräsentierenden Schwellwert befindlichen Singulär- oder Eigenwerte geschehen. In manchen Signalunterraumschätzmethoden ist diese Bestimmung auch implizit enthalten. Die Bestimmung der aus der zweiten, rein reellen Matrix $T(\tilde{X})$ hervorgegangenen Signalunterraummatrix $E_S$ wird ein dem Fachmann als Singulärwertzerlegung der zweiten reellen Matrix $T(\tilde{X})$ bekanntes Verfahren gewählt. Die Eigenwertzerlegung der geschätzten Kovarianzmatrix $T(\tilde{X})T^H(\tilde{X})$ oder eine Schur-artige Signalunterraumschätzmethode können ebenso gewählt werden.

Die uniforme lineare Antennengruppe AG wird als Beispiel des eindimensionalen Verfahrens in zwei, identische aber um einen Elementeabstand $\Delta$ verschobene Untergruppen eingeteilt, Figur 2 zeigt dazu verschiedene Möglichkeiten. Zu beachten ist dabei, daß die Untergruppen zueinander in Bezug auf den Gruppenmittelpunkt symmetrisch sind - dies kann nur bei schon symmetrischen Antennengruppen AG der Fall sein. Eine möglichst große Überlappung der Untergruppen ist in der Regel gewünscht, da dadurch jede Untergruppe eine Maximalzahl m von Antennenelementen aufweisen kann und eine größtmögliche Auflösung erzielt werden kann. So wird im Ausführungsbeispiel die Untergruppenbildung gemäß Figur 2a gewählt.

Der Abstand der zwei Untergruppen $\Delta$ ist im Falle der maximalen Überlappung und bei konstantem Elementeabstand gleich diesem Elementenabstand $\Delta$. Im Ausführungsbeispiel des erfindungsgemaßen Verfahrens ist zudem die zentro-symmetrische Eigenschaft der Antennengruppe AG weiterhin eingeschränkt auf uniforme, d.h. identische, Antennenelemente. Beim Ausfall einzelner Antennenelemente lassen sich uniforme Antennengruppen AG leichter unter Beibehaltung der Symmetrie anpassen.

Zur Aufstellung eines ggf. überbestimmten Gleichungssytems der Signalunterraummatrix $E_S$ müssen Selektionsmatrizen $K_1, K_2$ aufgestellt werden. Diese Selektionsmatrizen $K_1, K_2$ werden aus einer Ahnlichkeitsabbildung nach Gleichung (8) aus zentro-hermitischen Matrizen gewonnen.

$$K_1 = Q_m^H (J_1 + J_2) Q_M$$
$$K_2 = Q_m^H j(J_1 - J_2) Q_M \qquad (8)$$

Für die beispielhaft gewählte Antennengruppe AG nach Figur 2a (Elementezahl M=6, maximale Überlappung mit Untergruppenelementezahl m=5) ergeben sich beispielsweise Hilfsmatrizen $J_1, J_2 \in R^{m \times M}$:

$$J_1 = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \end{bmatrix} \quad \text{und} \quad J_2 = \begin{bmatrix} 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \end{bmatrix}. \qquad (9)$$

Die Hilfsmatrix $J_1$ selektiert die Elemente der ersten Untergruppe und die Hilfsmatrix $J_2$ die Elemente der zweiten Untergruppe. Damit ergeben sich die Selektionsmatrizen $K_1, K_2$ bei einer Wahl der links $\Pi$-reelle Matrizen $Q_m^H$, $Q_M$ nach den Gleichung (4) und (5) zu:

$$K_1 = \begin{bmatrix} 1 & 1 & 0 & 0 & 0 & 0 \\ 0 & 1 & 1 & 0 & 0 & 0 \\ 0 & 0 & \sqrt{2} & 0 & 0 & 0 \\ 0 & 0 & 0 & 1 & 1 & 0 \\ 0 & 0 & 0 & 0 & 1 & 1 \end{bmatrix} \text{ und } K_2 = \begin{bmatrix} 0 & 0 & 0 & -1 & 1 & 0 \\ 0 & 0 & 0 & 0 & -1 & 1 \\ 0 & 0 & 0 & 0 & 0 & -\sqrt{2} \\ 0 & -1 & 0 & 0 & 0 & 0 \\ 0 & 1 & -1 & 0 & 0 & 0 \end{bmatrix}. \qquad (10)$$

Es kann nun ein Gleichungssystem nach Gleichung (11) aufgestellt werden:

$$K_1 E_s Y \approx K_2 E_S \qquad (11)$$

Die wiederum rein reelle Lösungsmatrix $Y$, $Y \in R^{d \times d}$, kann approximativ mit Hilfe bekannter Lösungsmethoden für Gleichungssysteme, wie dem Kleinste-Fehlerquadrat-Verfahren gefunden werden. Stimmt die Anzahl der Untergruppenelemente m mit der Anzahl der dominanten Signalvektoren d überein, läßt sich eine eindeutige Lösung bestimmen. Ist die Anzahl der Untergruppenelemente größer, dann ist das Gleichungssystem überbestimmt und die für die jeweils gewählte Lösungsmethode optimale Lösung wird bestimmt.

Die Bestimmung der Eigenwertmatrix $\Omega$ aus der Lösungsmatrix $Y$ wird über eine Eigenwert-Zerlegung gemäß Gleichung (12) durchgeführt:

$$Y = T\Omega T^{-1} \in R^{d \times d}. \qquad (12)$$

Die Eigenwertmatrix $\Omega \in R^{d \times d}$ enthält auf ihrer Diagonalen die Eigenwerte $\omega_k$ ($\Omega = diag(\omega_k)$). Die Matrizen $T$ und $T^{-1}$ repräsentieren eine Spaltenmatix der Eigenvektoren bzw. dieselbe in einer invertierten Form. Die Eigenwerte können auch über eine Schur-Zerlegung bestimmt werden.

Ein das eindimensionale erfindungsgemäße Verfahren besonders auszeichnender Zuverlässigkeitstest testet alle ermittelten Eigenwerte $\omega_k$ auf ihre Eigenschaften. Werden nur reelle Eigenerte $\omega_k$ festgestellt, so können die ermittelten Eigenwerte $\omega_k$ als zuverlässig angesehen werden. Beim Auftreten von konjugiert komplexen Lösungen ist diese Zuverlässigkeit nicht gegeben und eine Wiederholung des Verfahrens mit einer größeren Anzahl von Sensorelementen M oder einer größeren Anzahl von Abtastwerten N ist vonnöten.

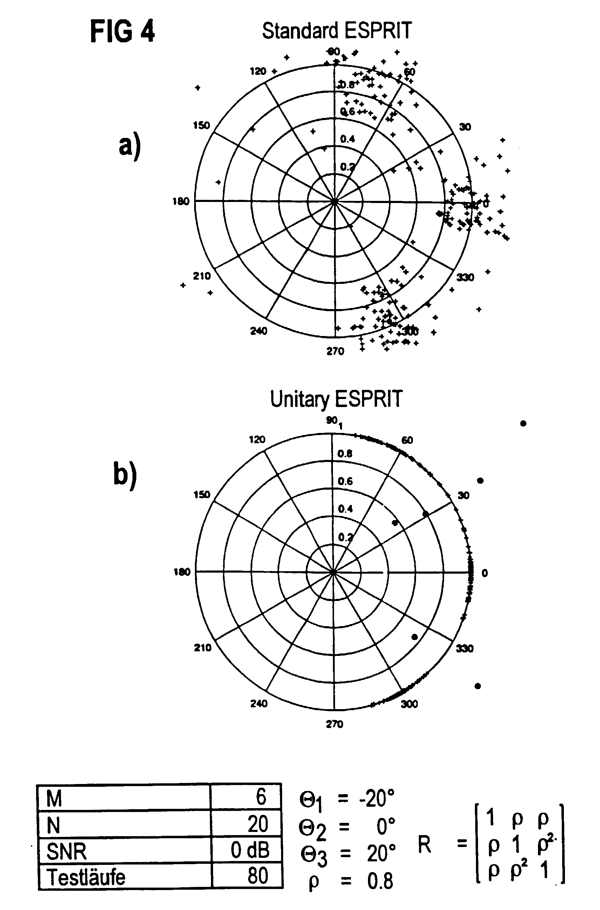

Figur 4 zeigt einen Vergleich der Auswerteergebnisse des Standard ESPRIT (4a) und des erfindungsgemäßen Unitary ESPRIT Verfahrens (4b) von drei miteinander korrelierten Signalen in einer Darstellung der Phasenfaktoren $e^{j\mu_k}$ auf dem Einheitskreis nach 80 Testläufen.

Figur 4b zeigt den Einheitskreis mit den durch das erfindungsgemäße Verfahren bestimmten Phasenfaktoren $e^{j\mu_k}$. Alle Phasenfaktoren $e^{j\mu_k}$ liegen bei zuverlässigem Ergebnis auf dem Einheitskreis, die Eigenwerte $\omega_k$ sind damit reell. Drei der in Figur 4b dargestellten Testläufe brachten kein zuverlässiges Ergebnis - man erhielt konjugiert komplexe Lösungen, das Verfahren muß mit verbesserter Datenbasis erneut durchgeführt werden. Figur 4a zeigt im Vergleich dazu die mit wesentlich geringerer Genauigkeit bestimmten Phasenfaktoren bei Verwendung des Standard ESPRIT Verfahrens.

Die Einfallsrichtungen $\theta_k$ der Signalkomponenten $x_k$ zur Richtungsschätzung der auszuwertenden Signale $s_1, s_2$ werden über die Gleichung (13)

$$\mu_k = 2\arctan\omega_k = 2\pi/\lambda \cdot \Delta\sin\theta_k \qquad (13)$$

bestimmt. Die Wellenlänge $\lambda$ ist für alle Signale bzw. Signalkomponenten gleich.

Schließlich können die Komponenten der Quellensignale $\hat{S}$ mittels der allgemeinen Gleichung (14) bestimmt werden,

$$\hat{S} = \hat{A}^+ \tilde{X} \qquad (14)$$

wobei eine geeignete Pseudoinverse $\hat{A}^+$ der in Gleichung (15) für das Ausführungsbeispiel angegebenen Systemmatrix $\hat{A}$ zum Beispiel über die Gleichung (16) errechnet wird.

Die geschätzte Systemmatrix $\hat{A}$ des Ausführungsbeispiels hat die Form (M=6, d=4) :

$$\hat{A} = \begin{bmatrix} 1 & 1 & 1 & 1 \\ e^{j\mu_1} & e^{j\mu_2} & e^{j\mu_3} & e^{j\mu_4} \\ e^{j2\mu_1} & e^{j2\mu_2} & e^{j2\mu_3} & e^{j2\mu_4} \\ e^{j3\mu_1} & e^{j3\mu_2} & e^{j3\mu_3} & e^{j3\mu_4} \\ e^{j4\mu_1} & e^{j4\mu_2} & e^{j4\mu_3} & e^{j4\mu_4} \\ e^{j5\mu_1} & e^{j5\mu_2} & e^{j5\mu_3} & e^{j5\mu_4} \end{bmatrix} . \qquad (15)$$

Die Gleichung zur Bildung der Pseudoinversen der geschätzten Systemmatrix $\hat{A}$ lautet:

$$\hat{A}^+ = (A^H A)^{-1} A^H \qquad (16)$$

Die Gleichung (14) vereinfacht sich zu

$$\hat{S} = (DT^{-1} E_S^H Q_M^H)\tilde{X} , \qquad (17)$$

wenn die reelle Signalunterraummatrix $E_S$ nur orthogonale Spalten hat. Die Komponenten $x_k$ der Quellensignale $s_1$, $s_2$ werden wiedergewonnen durch eine Multiplikation einer Pseudoinversen $DT^{-1}E_M^H Q_M^H$ der geschätzten, die Phasenfaktoren $e^{j\mu_k}$ der ermittelten Eigenwerte $\omega_k$ enthaltenden geschätzten Systemmatrix $\hat{A}$, $\hat{A} \in \mathbf{R}^{M \times d}$ mit der Meßwertmatrix $\tilde{X}$. Dabei stellt die Diagonalmatrix $D \in \mathbf{C}^{d \times d}$ eine willkürlich gewählte Diagonalmatrix der Dimension d x d dar.

Die aus den Empfangsfall durch die Auswerteeinrichtung AE gewonnene geschätze Systemmatrix Sende- und Empfangsfall identisch. Die zu sendenden Signale $s_1, s_2$ können nun in einer Weise in Signalkomponenten $x_k$ zerlegt und in verschiedene, durch das Empfangen bestimmte Richtungen und entsprechend verzögert abgestrahlt werden, so daß sie sich beim Empfänger leistungsmäßig überlagern.

## Zweidimenoionale Richtungsschätzung

Für die zweidimensionale Auswertung müssen einige Verfahrensschritte für die nun zwei Auswertedimensionen parallel ausgeführt werden. Bei der nun zweidimensionalen, zentro-symmetrischen Sensorgruppe ist keine vorgeschriebene Reihenfolge des Einlesens der Abtastwerte in Bezug auf die Anordnung der Sensoren vorgeschrieben, jedoch muß die Systemmatrix $\hat{A}$, der in Gleichung (1) vorgeschriebenen Form genügen.

Die Umwandlung der komplexen Meßwertmatrix $\tilde{X}$ in eine ausschließlich reelle Werte enthaltende, den Meßwerten zuordenbare zweite, rein reelle Matrix $\mathbf{T}(\tilde{X})$ der Dimension (Mx2N) und eine Signaluntergruppenschatzung zur Ermittlung der reellen Signalunterraummatrix $E_S$ durch Verarbeitung der reellen, Mx2N-dimensionalen Matrix $\mathbf{T}(\tilde{X})$ unter Berücksichtigung der d dominanten den Signalunterraum auf spannenden Vektoren wird analog dem eindimensionalen Verfahren durchgeführt.

Die Untergruppenbildung in zwei zueinander symmetrische Untergruppen und eine Festlegung von je zwei Selektionsmatrizen $K_{\mu 1}, K_{\mu 2}$ und $K_{\nu 1}, K_{\nu 2}$ wird für die zwei Dimensionen x,y der Sensorgruppe getrennt vorgenommen, wobei der Index μ der Dimension x und der Index ν der Dimension y zugeordnet ist. Die Untergruppenbildung der zwei Ausdehnungsrichtungen muß nicht nach den gleichen Gesichtspunkten erfolgen, d.h. $\Delta_x$ muß nicht gleich $\Delta_y$ sein (Abstand der Untergruppen in x bzw. y-Richtung) und $m_y$ kann unabhängig von $m_x$ ($m_x$, $m_y$ die Anzahl der Untergruppenelemente in x bzw. y-Richtung) gewählt werden.

Es werden zwei Gleichungssysteme aufgestellt:

$$K_{\mu 1} E_S Y_\mu \approx K_{\mu 2} E_S$$
$$K_{\nu 1} E_S Y_\nu \approx K_{\nu 2} E_S \qquad . \tag{18}$$

Die Lösungsmatrizen $Y_\mu, Y_\nu$ werden beispielweise wiederum durch das Kleinste-Fehlerquadrat-Verfahren bestimmt.

Anschließend geschieht nach Gleichung (19) die Bestimmung der Eigenwerte der komplexen Matrix $Y_\mu + jY_\nu$.

$$Y_\mu + jY_\nu = T \Lambda T^{-1} \tag{19}$$

Die komplexe Eigenwertmatrix $\Lambda$ enthält auf ihrer Diagonalen $\Lambda = \textbf{\textit{diag}}(\lambda_k)$ die komplexen Eigenwerte $\lambda_k = (\omega_{\mu k} + j\omega_{\nu k})$. Dies bedeutet eine automatische Paarung der Eigenwerte in x ($\omega_{\mu k}$ 9 und y-Richtung ($\omega_{\nu k}$).

Die komplexen Eigenwerte $\lambda_k$ werden gemäß dem Azimut- $\theta_k$ und Elevationswinkel $\phi_k$ nach den Gleichungen (20) bis (22) ausgewertet.

$$\omega_{\mu k} = \tan(\mu_k/2)$$
$$\omega_{\nu k} = \tan(\nu_k/2) \tag{20}$$

$$u_k = \cos\phi_k \sin\theta_k \tag{21}$$

$$\nu_k = \sin\phi_k \sin\theta_k$$

$$\mu_k = 2\pi/\lambda \cdot \Delta_x u_k \tag{22}$$

$$\nu_k = 2\pi/\lambda \cdot \Delta_y \nu_k$$

Beide Winkel repräsentieren die Einfallsrichtung des jeweiligen Signals oder der Signalkomponente, siehe dazu Figur 3b.

Die Anwendbarkeit des erfindungsgemaßen Verfahrens zur Richtungsschätzung ist nicht auf eine Mobilfunkumgebung beschränkt, sondern umfaßt in ähnlicher Weise Probleme der Radar- oder Sonartechnik, der Astronomie, der Vermessung von Mobilfunkkanälen oder andere Probleme der seismischen oder medizinischen Signalverarbeitung. Verfahren zum richtungsempfindlichen Auswerten empfangener Signale, d.h. eine räumliche Filterung, lassen sich auf den Empfang elektro-magnetischer, akustischer und anderweitiger Wellenformen anwenden.

## Frequenzschätzung

Das erfindungsgemäße Verfahren kann ebenso zur Schätzung von Frequenzanteilen innerhalb eines empfangenen Signals zum Einsatz kommen, d.h. zur Spektralanalyse eingesetzt werden. Die Dimension der Sensorgruppe kann bei der Frequenzschatzung frei gewählt werden. Die Anordnung der Sensorelemente ist keinen Einschränkungen unterworfen. Die Dimensionen für die Sensorelemente und die äquidistanten Abtastwerte müssen dementsprechend vertauscht werden. Die Untergruppenbildung findet anhand einer Unterteilung z.B. der Abtastwerte entlang der Zeitachse statt. Die hochauflösende Auswertung kann eindimensional oder zweidimensional erfolgen und beruht überwiegend auf reellen Rechnungen. Es können nur ungedämpfte Schwingungen ausgewertet werden.

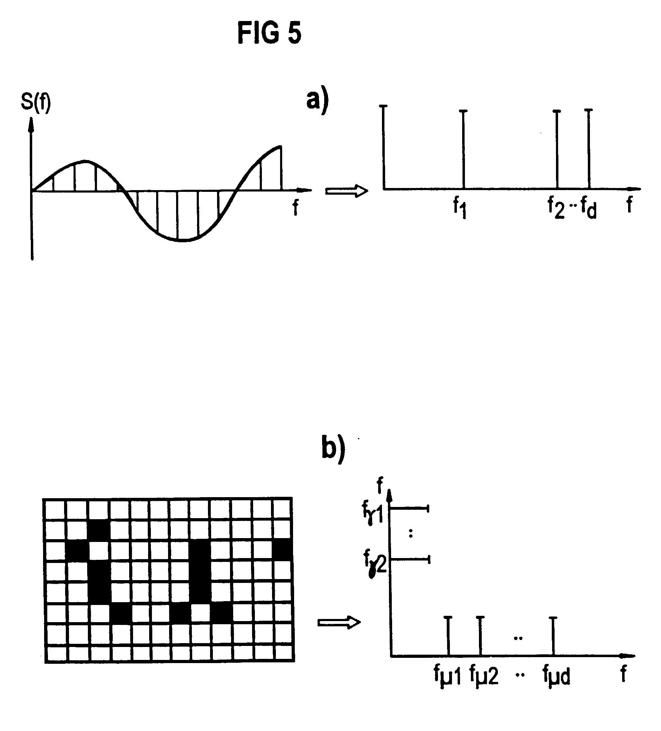

Die dominanten Frequenzen $\mu_k$ des Frequenzgemisches werden entsprechend der für die Richtungsschätzung geschilderten Verfahrensschritte ermittelt. In Figur 5a ist eine schematische Ansicht eines links dargestellten empfangenen Signals s(t) mit dem Ergebnis der anschließenden Frequenzzerlegung (rechts dargestellt) zur Frequenzschätzung angegeben. Ein Zuverlässigkeitstest ist für die eindimensionale Auswertung möglich. Die Anzahl der Sensorelemente kann bis auf ein Element reduziert werden. Beispielsweise bedienen sich Radar- und astronomische Anwendungen der Spektralanalyse. Zur zweidimensionalen Frequenzschätzung sei die Bildverarbeitung genannt (Figur 5b), wobei ein Bild in horizontaler und vertikaler Richtung nach den dominanten Frequenzen ausgewertet wird und die Sensorelemente beispielsweise den einzelnen Bildpixeln zugeordnet werden können. Ein einzelner Abtastwert erfaßt ein stehendes, mehrere Abtastwerte erfassen bewegte Bilder.

Tabelle

| Einsatzbedingungen des erfindungsgemäßen Verfahrens | | |
|---|---|---|
| | eindimensional | zweidimensional |
| Richtungsschätzung | - schmalbandige Signale<br>- zentro-symm. Sensorgruppe<br>- $\Delta \leq \lambda/2$ | - schmalbandige Signale<br>- zentro-symm. Sensorgruppe<br>- $\Delta \leq \lambda/2$ |
| Frequenzschätzung | - ungedämpfte Schwingungen<br>- äquidistante Abtastwerte | - ungedämpfte Schwingungen<br>- äquidistante Abtastwerte |
| Vorteile des erfindungsgemäßen Verfahrens | | |
| | eindimensional | zweidimensional |
| Richtungsschätzung | - Zuverlässigkeitstest<br>- Auflösung korrelierter Signale mit hoher Genauigkeit<br>- kohärente Signale auflösbar<br>- ausschließlich reelle Rechnung | - Eigenwertpaarung ohne Such- oder Optimierungsaufgaben<br>- Auflösung korrelierter Signale mit hoher Genauigkeit<br>- geschlossener Algorithmus angebbar<br>- reelle Rechnung bis auf Eigenwertpaarung |
| Frequenzschätzung | - Zuverlässigkeitstest<br>- Auflösung korrelierter Signale mit hoher Genauigkeit<br>- kohärente Signale auflösbar<br>- ausschließlich reelle Rechnung | - Eigenwertpaarung ohne Such- oder Optimierungsaufgaben<br>- Auflösung korrelierter Signale mit hoher Genauigkeit<br>- geschlossener Algorithmus angebbar<br>- reelle Rechnung bis auf Eigenwertpaarung |

**Patentansprüche**

1. Verfahren zum hochauflösenden Auswerten von Signalen zur eindimensionalen oder zweidimensionalen Richtungsschätzung in einer Einrichtung zur digitalen Signalverarbeitung, der eine zentro-symmetrische Sensorgruppe zugeordnet ist,
bei dem zur Auswertung der Signale

- in Form einer komplexen Meßwertmatrix ($\tilde{X}$) mit einer durch die Anzahl der Sensoren und die Anzahl von Abtastzeitpunkten bestimmten Dimension (M x N) aktuell in den Sensoren gemessene Abtastwerte gespeichert werden,
- eine Verknüpfung ($\Pi_M \tilde{X}^* \Pi_N$) einer M-dimensionalen antidiagonalen Permutationsmatrix ($\Pi_M$) mit der konjugiert komplexen Meßwertmatrix ($\tilde{X}^*$) und einer N-dimensionalen antidiagonalen Permutationsmatrix ($\Pi_N$) zu einer ersten Matrix ($\Pi_M \tilde{X}^* \Pi_N$) vorgenommen wird,
- eine Bestimmung einer zentro-hermitischen Matrix

$$\begin{bmatrix} \tilde{X} & \Pi_M \tilde{X}^* \Pi_N \end{bmatrix}$$

mit der komplexen Meßwertmatrix ($\tilde{X}$) und der ersten Matrix ($\Pi_M \tilde{X}^* \Pi_N$) vorgenommen wird,
- eine Bestimmung einer ausschließlich reelle Werte enthaltenden, den Meßwerten zuordenbaren zweiten, rein reellen Matrix ($T(\tilde{X})$) der Form

$$\mathrm{T}(\bar{X}) = Q_M^H \begin{bmatrix} \bar{X} & \Pi_M \bar{X}^* \Pi_N \end{bmatrix} Q_{2N}$$

mit der doppelten Elementezahl ausgehend von der zentro-hermitischen Matrix

$$\begin{bmatrix} \tilde{X} & \Pi_M \tilde{X}^* \Pi_N \end{bmatrix}$$

über eine M-dimensionale links $\Pi$-reelle, transjugierte Matrix ($Q_M^H$) und eine 2N-dimensionale links $\Pi$-reelle Matrix ($Q_{2N}$) vorgenommen wird,

- durch Verarbeitung der zweiten, rein reellen Matrix ($\mathrm{T}(\tilde{X})$) eine Signalunterraumschätzung zur Ermittlung einer reellen Signalunterraummatrix ($E_S$) mit d dominanten Vektoren der zweiten, rein reellen Matrix ($\mathrm{T}(\tilde{X})$) vorgenommen wird,

- eine für jede Auswertedimension x,y des Verfahrens getrennt vorgenommene Untergruppenbildung der zentro-symmetrischen Sensorgruppe in zwei zueinander verschobenen Untergruppen und eine Festlegung von zwei Selektionsmatrizen ($K_1, K_2, K_{\mu 1,2}, K_{\nu 1,2}$) für jede Auswertedimension x,y entsprechend der Konfiguration der Untergruppen vorgenommen wird,

- eine für jede Auswertedimension x,y des Verfahrens getrennt vorgenommene Lösung des durch die aus der Signalunterraumschätzung hervorgegangenen Signalunterraummatrix ($E_S$) und die Selektionsmatrizen ($K_1, K_2, K_{\mu 1,2}, K_{\nu 1,2}$) vorgegebenen Gleichungssystems durchgeführt wird, so daß jeweils eine Lösungsmatrix (**Y**, $Y_\mu$, $Y_\nu$) gemäß $K_1 E_s Y \approx K_2 E_s$ zur Verfügung steht,

- eine Bestimmung einer je nach der Dimension x,y des Auswerteverfahrens Eigenwertmatrix ($\Omega, \Lambda$) aus der Lösungsmatrix (**Y**, $Y_\mu$, $Y_\nu$) vorgenommen wird,

und bei dem die aus der Eigenwertmatrix ($\Omega, \Lambda$) bestimmten Eigenwerte ($\omega_k, \lambda_k$) die Richtungsschätzwerte repräsentieren.

2. Verfahren zum hochauflösenden Auswerten von Signalen zur eindimensionalen oder zweidimensionalen Frequenz schätzung in einer Einrichtung zur digitalen Signalverarbeitung,
bei dem zur Auswertung der Signale nach einem zentro-symmetrischen Datenmodell

- in Form einer komplexen Meßwertmatrix ($\bar{X}$) mit einer durch die Anzahl der Sensoren und die Anzahl von Abtastzeitpunkten bestimmten Dimension (M x N) aktuell in den Sensoren gemessene Abtastwerte gespeichert werden,

- eine Verknüpfung ($\Pi_M \tilde{X}^* \Pi_N$) einer M-dimensionalen antidiagonalen Permutationsmatrix ($\Pi_M$) mit der konjugiert komplexen Meßwertmatrix ($\tilde{X}^*$) und einer N-dimensionalen antidiagonalen Permutationsmatrix ($\Pi_N$) zu einer ersten Matrix ($\Pi_M \tilde{X}^* \Pi_N$) vorgenommen wird,

- eine Bestimmung einer zentro-hermitischen Matrix

$$\begin{bmatrix} \tilde{X} & \Pi_M \tilde{X}^* \Pi_N \end{bmatrix}$$

mit der komplexen Meßwertmatrix ($\tilde{X}$) und der ersten Matrix ($\Pi_M \tilde{X}^* \Pi_N$) vorgenommen wird,

- eine Bestimmung einer ausschließlich reelle Werte enthaltenden, den Meßwerten zuordenbaren zweiten, rein reellen Matrix ($\mathrm{T}(\tilde{X})$) der Form

$$\mathrm{T}(\tilde{X}) = Q_M^H \begin{bmatrix} \tilde{X} & \Pi_M \tilde{X}^* \Pi_N \end{bmatrix} Q_{2N}$$

mit der doppelten Elementezahl ausgehend von der zentro-hermitischen Matrix

$$\begin{bmatrix} \tilde{X} & \Pi_M \tilde{X}^* \Pi_N \end{bmatrix}$$

über eine M-dimensionale links $\Pi$-reelle, transjugierte Matrix ($\boldsymbol{Q}_M^H$) und eine 2N-dimensionale links $\Pi$-reelle Matrix ($\boldsymbol{Q}_{2N}$) vorgenommen wird,

- durch Verarbeitung der zweiten, rein reellen Matrix ($\mathbf{T}(\check{X})$) eine Signalunterraumschätzung zur Ermittlung einer reellen Signalunterraummatrix ($\boldsymbol{E}_S$) mit d dominanten Vektoren der zweiten, rein reellen Matrix ($\mathbf{T}(\check{X})$) vorgenommen wird,

- eine für jede Auswertedimension x,y des Verfahrens getrennt vorgenommene Untergruppenbildung der zentro-symmetrischen Sensorgruppe in zwei zueinander verschobenen Untergruppen und eine Festlegung von zwei Selektionsmatrizen ($\boldsymbol{K}_1,\boldsymbol{K}_2,\boldsymbol{K}_{\mu1,2},\boldsymbol{K}_{\nu1,2}$) für jede Auswertedimension x,y entsprechend der Konfiguration der Untergruppen vorgenommen wird,

- eine für jede Auswertedimension x,y des Verfahrens getrennt vorgenommene Lösung des durch die aus der Signalunterraumschätzung hervorgegangenen Signalunterraummatrix ($\boldsymbol{E}_S$) und die Selektionsmatrizen ($\boldsymbol{K}_1$, $\boldsymbol{K}_2,\boldsymbol{K}_{\mu1,2},\boldsymbol{K}_{\nu1,2}$) vorgegebenen Gleichungssystems durchgeführt wird, so daß jeweils eine Lösungsmatrix (Y, $\mathbf{Y}_\mu,\mathbf{Y}_\nu$) gemäß $\boldsymbol{K}_1\boldsymbol{E}_S\mathbf{Y} \approx \boldsymbol{K}_2\boldsymbol{E}_S$ zur Verfügung steht,

- eine Bestimmung einer je nach der Dimension x,y des Auswerteverfahrens Eigenwertmatrix ($\Omega,\Lambda$) aus der Lösungsmatrix ($\mathbf{Y},\mathbf{Y}_\mu,\mathbf{Y}_\nu$) vorgenommen wird,

und bei dem die aus der Eigenwertmatrix ($\Omega,\Lambda$) bestimmten Eigenwerte ($\omega_k,\lambda_k$) die Frequenzschätzwerte repräsentieren.

3. Verfahren nach Anspruch 1,
   **dadurch gekennzeichnet,**
   daß eine Formatumwandlung der Eigenwerte ($\omega_k,\lambda_k$) durchgeführt wird, wobei zur Richtungsschätzung der Einfallsrichtungen ($\theta_k,\phi_k$) der auszuwertenden Signale eine für jede, die Auswertedimension x,y des Verfahrens repräsentierende Ausdehnungsrichtung der aus M-Elementen bestehenden Sensorgruppe getrennt vorgenommene Bestimmung der Einfallsrichtungen ($\theta_k,\phi_k$) der mit einer Fensterlänge von N Meßwerten abgetasteten Signale aus den Eigenwerten ($\omega_k,\lambda_k$) der Eigenwertmatrix ($\Omega,\Lambda$) vorgenommen wird.

4. Verfahren nach Anspruch 2,
   **dadurch gekennzeichnet,**
   daß eine Formatumwandlung der Eigenwerte ($\omega_k,\ \lambda_k$) durchgeführt wird, wobei zur Frequenzschätzung der mit einer Fensterlänge von N Meßwerten über eine aus M Elementen bestehenden Sensorgruppe abgetasteten, während einer Fensterlänge ungedämpften Signale die Bestimmung der harmonischen Frequenzen ($\mu_k,\nu_k$) der auszuwertenden Signale vorgenommen wird.

5. Verfahren nach einem der Ansprüche 1 bis 4,
   **dadurch gekennzeichnet,**
   daß eine Bestimmung der d dominanten die dominanten Signalkomponenten ($x_k$) repräsentierenden Singuläroder Eigenwerte durch Auswahl der sich über einem durch eine starke Leistungsdifferenz repräsentierenden Schwellwert befindlichen Singulär- oder Eigenwerte vorgesehen ist.

6. Verfahren nach einem der vorhergehenden Ansprüche,
   **dadurch gekennzeichnet,**
   daß eine Rekonstruktion der Signalkomponenten ($x_k$) durch eine Multiplikation einer Pseudoinversen der geschätzten, die Phasenfaktoren ($e^{j\mu_k},e^{j\mu_\nu}$) der ermittelten Eigenwerte enthaltenden geschätzten Systemmatrix ($\hat{\boldsymbol{A}}$) mit der komplexen Meßwertmatrix ($\check{X}$) vorgenommen wird.

7. Verfahren nach einem der vorhergehenden Ansprüche,
   **dadurch gekennzeichnet,**
   daß zur Bestimmung der aus der zweiten, rein reellen Matrix ($\mathbf{T}(\check{X})$) hervorgegangenen Signalunterraummatrix ($\boldsymbol{E}_S$) ein als Eigenzerlegung der geschätzten Kovarianzmatrix ($\mathbf{T}(\check{X})\mathbf{T}(\check{X})^H$) bekanntes Verfahren gewählt wird.

8. Verfahren nach einem der Ansprüche 1 bis 6,
   **dadurch gekennzeichnet,**
   daß zur Bestimmung der aus der zweiten, rein reellen Matrix ($\mathbf{T}(\check{X})$) hervorgegangenen Signalunterraummatrix ($\boldsymbol{E}_S$) ein als Singulärwertzerlegung der zweiten, rein reellen Matrix ($\mathbf{T}(\check{X})$) bekanntes Verfahren gewählt wird.

9. Verfahren nach einem der Ansprüche 1 bis 6,
   **dadurch gekennzeichnet,**

daß zur Bestimmung der aus der zweiten, rein reellen Matrix ($\mathbf{T}(\breve{X})$) hervorgegangenen Signalunterraummatrix ($\boldsymbol{E_S}$) eine Schur-artige Signalunterraumschätzmethode gewählt wird.

10. Verfahren nach einem der Ansprüche 2, 4 bis 9,
   **dadurch gekennzeichnet,**
   daß die eindimensionale Sensorgruppe aus M Elementen besteht und das Verfahren nur eine Auswertedimension x aufweist.

11. Verfahren nach Anspruch 10,
   **gekennzeichnet durch**
   eine Zuverlässigkeitsabschätzung durch einen Test der Eigenwerte ($\omega_k$) der Lösungsmatrix ($\mathbf{Y}$) auf nicht reelle Lösungen.

12. Verfahren nach einem der Ansprüche 1 bis 9,
   **dadurch gekennzeichnet,**
   daß die zweidimensionale, flächenhafte, zentro-symmetrische, in zwei Richtungen invariable Sensorgruppe aus M Elementen besteht und das Verfahren die Auswertedimensionen x und y aufweist und daß

   - die Selektionsmatrizen ($\boldsymbol{K_{\mu 1}, K_{\mu 2}, K_{\nu 1}, K_{\nu 2}}$) entsprechend den zwei Dimensionen x,y der Sensorgruppe bestimmt werden,
   - die Lösung des durch die aus der Signaluntergruppenbildung hervorgegangenen Signalunterraummatrix ($\boldsymbol{E_S}$) und die Selektionsmatrizen ($\boldsymbol{K_1, K_2}$) vorgegebenen Gleichungssystems nach den Dimensionen x und y gemäß den Beziehungen $\boldsymbol{K_{\mu,\nu\,1} E_S Y_{\mu,\nu} \approx K_{\mu,\nu\,2} E_S}$ durchgeführt wird, so daß jeweils eine Lösungsmatrix ($\mathbf{Y_\mu, Y_\nu}$) gemäß $\boldsymbol{K_1 E_S Y \approx K_2 E_S}$ zur Verfügung steht,
   - die Zuordnung der Eigenwerte ($\lambda_k$) der Lösungsmatrizen ($\mathbf{Y_\mu, Y_\nu}$) über eine komplexe Bestimmung der komlexen Eigenwertmatrix ($\Lambda$) nach der Beziehung $\mathbf{Y_\mu} + j\mathbf{Y_\nu} = \boldsymbol{T}\Lambda\boldsymbol{T^{-1}}$ erfolgt und
   - die durch den Azimut ($\theta_k$) und Elevationswinkel ($\phi_k$) repräsentierten Einfallsrichtungen durch die Beziehungen $\omega_{\mu k} = \tan(\mu_k/2)$, $\omega_{\nu k} = \tan(\nu_k/2)$; $\mu_k = \cos\phi_k \sin\theta_k$, $\nu_k = \sin\phi_k \sin\theta_k$ und $\mu_k = 2\pi/\lambda \cdot \Delta_x \mu_k$, $\nu_k = 2\pi/\lambda \cdot \Delta_y \nu_k$ bestimmt werden.

13. Verfahren nach einem der Ansprüche 1 bis 12,
   **dadurch gekennzeichnet,**
   daß vor der Initialisierung der komplexen Meßwertmatrix ($\breve{X}$) eine räumliche Glättung der Meßwerte vorgenommen wird.

14. Verfahren nach einem der Ansprüche 1 bis 13,
   **dadurch gekennzeichnet,**
   daß bei der Untergruppenbildung eine möglichst große Überlappung der Untergruppenelemente erfolgt.

15. Verfahren nach einem der Ansprüche 1 bis 14,
   **dadurch gekennzeichnet,**
   daß die zu Antennen ausgebildeten Sensoren zum Empfangen und gegebenenfalls Senden von hochfrequenten elektro-magnetischen Signalen geeignet sind.

16. Verfahren nach Anspruch 15,
   **gekennzeichnet durch**
   den Einsatz in Mobilfunksystemen.

17. Verfahren nach Anspruch 15,
   **gekennzeichnet durch**
   den Einsatz in Drahtlos-Kommunikationssystemen.

18. Verfahren nach Anspruch 15,
   **gekennzeichnet durch**
   den Einsatz in hochauflösenden Radarbildverarbeitungssystemen.

19. Verfahren nach einem der Ansprüche 1 bis 14,
   **dadurch gekennzeichnet,**

daß die zu Schallempfängern ausgebildeten Sensoren zum Senden und Empfangen von akustischen Signalen geeignet sind.

**20.** Verfahren nach Anspruch 19,
**gekennzeichnet durch**
den Einsatz in Sonarsystemen.

**21.** Verfahren nach Anspruch 19,
**gekennzeichnet durch**
den Einsatz in medizintechnischen Systemen.

**Claims**

1. Method for the high-resolution evaluation of signals for one-dimensional or two-dimensional directional estimation in a device for digital signal processing to which a centrosymmetrical sensor group is assigned, in which, for the purpose of evaluating signals,

   - sample values currently measured in the sensors are stored in the form of a complex measured-value matrix ($\tilde{X}$) having a dimension (M x N) determined by the number of the sensors and the number of sampling instances,
   - a combination ($\Pi_M \tilde{X}^* \Pi_N$) of an M-dimensional antidiagonal permutation matrix ($\Pi_M$) with the conjugate complex measured-valued matrix ($\tilde{X}^*$) and an N-dimensional antidiagonal permutation matrix ($\Pi_N$) to form a first matrix ($\Pi_M \tilde{X}^* \Pi_N$) is undertaken,
   - a determination of a centrohermitian matrix [$\tilde{X}$  $\Pi_M \tilde{X}^* \Pi_N$] with the complex measured-value matrix ($\tilde{X}$) and the first matrix ($\Pi M \tilde{X}^* \Pi_N$) is undertaken,
   - via an M-dimensional left $\Pi$-real, adjoint matrix ($Q_M^H$) and a 2N-dimensional left $\Pi$-real matrix ($Q_{2N}$), a determination is undertaken, starting from the centrohermitian matrix [$\tilde{X}$  $\Pi_M \tilde{X}^* \Pi_N$], of the second, purely real matrix (T($\tilde{X}$)) of the form T($\tilde{X}$)=$Q_M^H$[$\tilde{X}$  $\Pi_M \tilde{X}^* \Pi_N$]$Q_{2N}$ which contains exclusively real values, can be assigned to the measured values and has double the number of elements,
   - by means of processing the second, purely real matrix (T($\tilde{X}$)), a signal subspace estimation is undertaken to determine a real signal subspace matrix ($E_S$) with d dominant vectors of the second, purely real matrix (T($\tilde{X}$)),
   - a subgroup formation, undertaken separately for each evaluation dimension x,y of the method, of the centrosymmetrical sensor group into two subgroups displaced relative to one another is undertaken, and a determination of two selection matrices ($K_1$,$K_2$,$K_{\mu1,2}$,$K_{v1,2}$) is undertaken for each evaluation dimension x,y in accordance with the configuration of the subgroups,
   - a solution, undertaken separately for each evaluation dimension x,y of the method, of the system of equations prescribed by the signal subspace matrix($E_S$), produced from the signal subspace estimation, and the selection matrices ($K_1$,$K_2$,$K_{\mu1,2}$,$K_{v1,2}$) is carried out so that in each case a solution matrix (Y,$Y_\mu$,$Y_v$) is available in accordance with $K_1 E_S Y \approx K_2 E_S$,
   - a determination of an eigenvalue matrix ($\Omega,\Lambda$) from the solution matrix (Y,$Y_\mu$,$Y_v$) is undertaken, depending on the dimension x,y of the evaluation method,

   and in which the eigenvalues ($\omega_k,\lambda_k$) determined from the eigenvalue matrix ($\Omega,\Lambda$) represent the directional or frequency estimates.

2. Method for the high-resolution evaluation of signals for one-dimensional or two-dimensional frequency estimation in a device for digital signal processing, in which, for the purpose of evaluating the signals in accordance with a centrosymmetrical data model,

   - sample values currently measured in the sensors are stored in the form of a complex measured-value matrix ($\tilde{X}$) having a dimension (M x N) determined by the number of the sensors and the number of sampling instances,
   - a combination ($\Pi_M \tilde{X}^* \Pi_N$) of an M-dimensional antidiagonal permutation matrix ($\Pi_M$) with the conjugate complex measured-valued matrix ($\tilde{X}^*$) and an N-dimensional antidiagonal permutation matrix ($\Pi_N$) to form a first matrix ($\Pi_M \tilde{X}^* \Pi_N$) is undertaken,
   - a determination of a centrohermitian matrix [$\tilde{X}$  $\Pi_M \tilde{X}^* \Pi_N$] with the complex measured-value matrix ($\tilde{X}$) and

the first matrix ($\Pi_M \tilde{x}^* \Pi_N$) is undertaken,

- via an M-dimensional left $\Pi$-real, adjoint matrix ($Q_M^H$) and a 2N-dimensional left $\Pi$-real matrix ($Q_{2N}$), a determination is undertaken, starting from the centrohermitian matrix [ $\tilde{x}$ $\Pi_M \tilde{x}^* \Pi_N$ ], of the second, purely real matrix (T( $\tilde{x}$ )) of the form T( $\tilde{x}$ ) $=Q_M^H$[ $\tilde{x}$ $\Pi_M \tilde{x}^* \Pi_N$]$Q_{2N}$ which contains exclusively real values, can be assigned to the measured values and has double the number of elements,
- a signal subspace estimation is undertaken in order to determine a real signal subspace matrix ($E_S$) with d dominant vectors of the second, purely real matrix (T( $\tilde{x}$ )) by means of processing the second, purely real matrix (T( $\tilde{x}$ )),
- a subgroup formation, undertaken separately for each evaluation dimension x,y of the method, of the centrosymmetrical sensor group into two subgroups displaced relative to one another is undertaken, and a determination of two selection matrices ($K_1, K_2, K_{\mu1,2}, K_{v1,2}$) is undertaken for each evaluation dimension x,y in accordance with the configuration of the subgroups,
- a solution, undertaken separately for each evaluation dimension x,y of the method, of the system of equations prescribed by the signal subspace matrix($E_S$), produced from the signal subspace estimation, and the selection matrices ($K_1$, $K_2$, $K_{\mu1,2}$, $K_{v1,2}$) is carried out so that in each case a solution matrix ($Y, Y_\mu, Y_v$) is available in accordance with $K_1 E_S Y \approx K_2 E_S$,
- a determination of the eigenvalue matrix ($\Omega, \Lambda$) from the solution matrix ($Y, Y_\mu, Y_v$) is undertaken, depending on the dimension x,y of the evaluation method,

and in which the eigenvalues ($\omega_k, \lambda_k$) determined from the eigenvalue matrix ($\Omega, \Lambda$) represent the directional or frequency estimates.

**3.** Method according to Claim 1, characterized in that a format conversion of the eigenvalues ($\omega_k, \lambda_k$) is carried out, it being the case that for the purpose of the directional estimation of the directions of incidence ($\theta_k, \phi_k$) of the signals to be evaluated, a determination, by undertaking separately for each direction of extent, representing the evaluation dimension x,y of the method, of the sensor group comprising M elements, of the directions of incidence ($\theta_k, \phi_k$) of the signals sampled with a window length of N measured values is undertaken from the eigenvalues ($\omega_k, \lambda_k$) of the eigenvalue matrix ($\Omega, \Lambda$).

**4.** Method according to Claim 2, characterized in that a format conversion of the eigenvalues ($\omega_k, \lambda_k$) is carried out, it being the case that a determination of the harmonic frequencies ($\mu_k, v_k$) of the signals to be evaluated is undertaken for the purpose of the frequency estimation of the signals which are sampled with a window length of N measured values, via a sensor group comprising M elements, and which are unattenuated during a window length.

**5.** Method according to one of Claims 1 to 4, characterized in that a determination of the d dominant singular values or eigenvalues representing the dominant signal components ($x_k$) is provided by selecting the singular values or eigenvalues located above a special value represented by a large power difference.

**6.** Method according to one of the preceding claims, characterized in that a reconstruction of the signal components ($x_k$) is undertaken by multiplying a pseudo-inverse of the estimated system matrix ($\hat{A}$) containing the phase factors ($e^{j\mu k}, e^{j\mu v}$) of the eigenvalues determined by the complex measured-value matrix ( $\tilde{x}$ ).

**7.** Method according to one of the preceding claims, characterized in that a method known as self-decomposition of the estimated covariance matrix (T( $\tilde{x}$ )T( $\tilde{x}$ )$^H$) is selected for determining the signal subspace matrix ($E_S$) produced from the second, purely real matrix (T( $\tilde{x}$ )).

**8.** Method according to one of Claims 1 to 6, characterized in that a method known as singular-value decomposition of the second, purely real matrix (T( $\tilde{x}$ )) is selected for determining the signal subspace matrix ($E_S$) produced from the second, purely real matrix (T( $\tilde{x}$ )).

**9.** Method according to one of Claims 1 to 6, characterized in that a Schur-like signal subspace estimation method is selected for determining the signal subspace matrix ($E_S$) produced from the second, purely real matrix (T( $\tilde{x}$ )).

**10.** Method according to one of Claims 2, 4 to 9, characterized in that the one-dimensional sensor group comprises M elements, and the method has only one evaluation dimension x.

**11.** Method according to Claim 10, characterized by a reliability estimation conducted by a test of the eigenvalues ($\omega_k$) of the solution matrix (Y) for non-real solutions.

**12.** Method according to one of Claims 1 to 9, characterized in that the two-dimensional, planar, centrosymmetrical sensor group, which is invariable in two directions, comprises M elements and the method has the evaluation dimensions x and y, and in that

- the selection matrices ($K_{\mu1}$, $K_{\mu2}$, $K_{\nu1}$, $K_{\nu2}$) are determined in accordance with the two dimensions x,y of the sensor group,
- the solution of the system of equations, prescribed by the signal subspace matrix ($E_S$), produced from the signal subgroup formation, and the selection matrices ($K_1$, $K_2$) for the dimensions x and y is carried out in accordance with the relationships $K_{\mu,\nu1}E_SY_{\mu,\nu} \approx K_{\mu,\nu2}E_S$ with the result that in each case solution matrix ($Y_\mu$, $Y_\nu$) in accordance with $K_1E_SY \approx K_2E_S$ is available,
- the assignment of the eigenvalues ($\lambda_k$) of the solution matrices ($Y_\mu$, $Y_\nu$) is performed via a complex determination of the complex eigenvalue matrix ($\Lambda$) in accordance with the relationship $Y_\mu + jY_\nu = T\Lambda T^{-1}$, and
- the directions of incidence represented by the azimuth ($\theta_k$) and elevation angle ($\phi_k$) are deter-mined by means of the relationships $\omega_{\mu k} = \tan(\mu_k/2)$, $\omega_{\nu k} = \tan(\nu_k/2)$ ; $\mu_k = \cos\phi_k\sin\theta_k$, $\nu_k = \sin\phi_k\sin\theta_k$ and $\mu_k = 2\pi/\lambda \cdot \Delta_x\mu_k$, $\nu_k = 2\pi/\lambda \cdot \Delta_y\nu_k$.

**13.** Method according to one of Claims 1 to 12, characterized in that a spatial smoothing of the measured values is undertaken before the initialization of the complex measured-value matrix ( $\tilde{x}$ ).

**14.** Method according to one of Claims 1 to 13, characterized in that during the subgroup formation as large as possible an overlap of the subgroup elements takes place.

**15.** Method according to one of Claims 1 to 14, characterized in that the sensors constructed as antennas are suitable for receiving and, if appropriate, transmitting radio-frequency electromagnetic signals.

**16.** Method according to Claim 15, characterized by use in mobile radio systems.

**17.** Method according to Claim 15, characterized by use in wireless communication systems.

**18.** Method according to Claim 15, characterized by use in high-resolution radar image processing systems.

**19.** Method according to one of Claims 1 to 14, characterized in that the sensors constructed as sound receivers are suitable for transmitting and receiving acoustic signals.

**20.** Method according to Claim 19, characterized by use in sonar systems.

**21.** Method according to Claim 19, characterized by use in medical technology systems.

**Revendications**

**1.** Procédé pour l'analyse haute définition de signaux en vue de l'estimation unidimensionnelle ou bidimensionnelle de la direction dans un dispositif qui est destiné au traitement numérique des signaux et auquel un groupe de capteurs à centre de symétrie est associé,
dans lequel, pour l'analyse des signaux,

- on mémorise des valeurs échantillonnées mesurées dans les capteurs sous la forme d'une matrice complexe ($\tilde{x}$) de valeurs mesurées dont la dimension (M x N) est déterminée par le nombre des capteurs et par le nombre des instants d'échantillonnage,
- on effectue une combinaison ($\Pi_M\tilde{x}^* \Pi_N$) d'une matrice ($\Pi_M$) de permutation antidiagonale de dimension M avec la matrice conjuguée complexe ($\tilde{x}^*$) de valeurs mesurées et avec une matrice ($\Pi_N$) de permutation antidiagonale de dimension N pour former une première matrice ($\Pi_M\tilde{x}^* \Pi_N$),
- on détermine une matrice centro-hermitienne [$\tilde{x} \ \Pi_M\tilde{x}^* \Pi_N$] avec la matrice complexe ($\tilde{x}$) de valeurs mesurées et avec la première matrice ($\Pi_M\tilde{x}^* \Pi_N$),
- on détermine une deuxième matrice entièrement réelle ($T(\tilde{x})$) qui contient seulement des valeurs réelles, qui peut être associée aux valeurs mesurées et qui a la forme $\mathbf{T(X)} = \mathbf{Q}_M^H [\tilde{x}\Pi_M\tilde{x}^* \Pi_N]\mathbf{Q_{2N}}$, avec le double du nombre d'éléments, à partir de la matrice centro-hermitienne [$\tilde{x} \ \Pi_M\tilde{x}^* \Pi_N$] et par l'intermédiaire d'une matrice associée ($\mathbf{Q}_M^H$) de dimension M et $\Pi$-réelle à gauche et d'une matrice ($\mathbf{Q_{2N}}$) de dimension 2N et $\Pi$-réelle à

gauche,

- en traitant la deuxième matrice entièrement réelle ($\mathbf{T}(\breve{x})$), on effectue une estimation de sous-espaces de signaux pour déterminer une matrice réelle ($\mathbf{E_S}$) de sous-espaces de signaux avec d vecteurs dominants de la deuxième matrice entièrement réelle ($\mathbf{T}(\breve{x})$),
- on met en oeuvre une formation de sous-groupes, effectuée séparément pour chaque dimension x, y d'analyse du procédé, du groupe de capteurs à centre de symétrie afin de former deux sous-groupes décalés l'un par rapport à l'autre et on met en oeuvre une détermination de deux matrices ($\mathbf{K_1}$, $\mathbf{K_2}$, $\mathbf{K}_{\mu1,2}$, $\mathbf{K}_{\nu1,2}$) de sélection pour chaque dimension x, y d'analyse selon la configuration des sous-groupes,
- on met en oeuvre une résolution, effectuée séparément pour chaque dimension x, y d'analyse du procédé, du système d'équations donné par la matrice ($\mathbf{E_S}$) de sous-espaces de signaux déduite de l'estimation de sous-espaces de signaux et par les matrices ($\mathbf{K_1}$, $\mathbf{K_2}$, $\mathbf{K}_{\mu1,2}$, $\mathbf{K}_{\nu1,2}$) de sélection, de manière à disposer à chaque fois d'une matrice ($\mathbf{Y}$, $\mathbf{Y}_\mu$, $\mathbf{Y}_\nu$) de solution selon $\mathbf{K_1 E_S Y} \approx \mathbf{K_2 E_S}$,
- on détermine à partir de la matrice ($\mathbf{Y}$, $\mathbf{Y}_\mu$, $\mathbf{Y}_\nu$) de solution une matrice ($\Omega$, $\Lambda$) de valeurs propres selon la dimension x, y du procédé d'analyse,

et dans lequel les valeurs propres ($\omega_k$, $\lambda_k$) déterminées par la matrice ($\Omega$, $\Lambda$) de valeurs propres représentent les valeurs estimées de direction.

2. Procédé pour l'analyse haute définition de signaux en vue de l'estimation unidimensionnelle ou bidimensionnelle de la fréquence dans un dispositif qui est destiné au traitement numérique des signaux,
dans lequel, pour l'analyse des signaux selon un modèle de données à centre de symétrie,

- on mémorise des valeurs échantillonnées mesurées dans les capteurs sous la forme d'une matrice complexe ($\breve{x}$) de valeurs mesurées dont la dimension (M x N) est déterminée par le nombre des capteurs et par le nombre des instants d'échantillonnage,
- on effectue une combinaison ($\Pi_M \breve{x}^* \Pi_N$) d'une matrice ($\Pi_M$) de permutation antidiagonale de dimension M avec la matrice conjuguée complexe ($\breve{x}^*$) de valeurs mesurées et avec une matrice ($\Pi_N$) de permutation antidiagonale de dimension N pour former une première matrice ($\Pi_M \breve{x}^* \Pi_N$),
- on détermine une matrice centro-hermitienne [$\breve{x}$ $\Pi_M \breve{x}^* \Pi_N$] avec la matrice complexe ($\breve{x}$) de valeurs mesurées et avec la première matrice ($\Pi_M \breve{x}^* \Pi_N$),
- on détermine une deuxième matrice entièrement réelle ($\mathbf{T}(\breve{x})$) qui contient seulement des valeurs réelles, qui peut être associée aux valeurs mesurées et qui a la forme $\mathbf{T}(\breve{x}) = \mathbf{Q}_M^H [\breve{x} \ \Pi_M \breve{x}^* \Pi_N] \mathbf{Q}_{2N}$, avec le double du nombre d'éléments, à partir de la matrice centro-hermitienne [$\breve{x} \Pi_M \breve{x}^* \Pi_N$] et par l'intermédiaire d'une matrice associée ($\mathbf{Q}_M^H$) de dimension M et $\Pi$-réelle à gauche et d'une matrice ($\mathbf{Q}_{2N}$), de dimension 2N et $\Pi$-réelle à gauche,
- en traitant la deuxième matrice entièrement réelle ($\mathbf{T}(\breve{x})$), on effectue une estimation de sous-espaces de signaux pour déterminer une matrice réelle ($\mathbf{E_S}$) de sous-espaces de signaux avec d vecteurs dominants de la deuxième matrice entièrement réelle ($\mathbf{T}(\breve{x})$),
- on met en oeuvre une formation de sous-groupes, effectuée séparément pour chaque dimension x, y d'analyse du procédé, du groupe de capteurs à centre de symétrie afin de former deux sous-groupes décalés l'un par rapport à l'autre et on met en oeuvre une détermination de deux matrices ($\mathbf{K_1}$, $\mathbf{K_2}$, $\mathbf{K}_{\mu1,2}$, $\mathbf{K}_{\nu1,2}$) de sélection pour chaque dimension x, y d'analyse selon la configuration des sous-groupes,
- on met en oeuvre une résolution, effectuée séparément pour chaque dimension x, y d'analyse du procédé, du système d'équations donné par la matrice ($\mathbf{E_S}$) de sous-espaces de signaux déduite de l'estimation de sous-espaces de signaux et par les matrices ($\mathbf{K_1}$, $\mathbf{K_2}$, $\mathbf{K}_{\mu1,2}$, $\mathbf{K}_{\nu1,2}$) de sélection, de manière à disposer à chaque fois d'une matrice ($\mathbf{Y}$, $\mathbf{Y}_\mu$, $\mathbf{Y}_\nu$) de solution selon $\mathbf{K_1 E_S Y} \approx \mathbf{K_2 E_S}$,
- on détermine à partir de la matrice ($\mathbf{Y}$, $\mathbf{Y}_\mu$, $\mathbf{Y}_\nu$) de solution une matrice ($\Omega$, $\Lambda$) de valeurs propres selon la dimension x, y du procédé d'analyse,

et dans lequel les valeurs propres ($\omega_k$, $\lambda_k$) déterminées par la matrice ($\Omega$, $\Lambda$) de valeurs propres représentent les valeurs estimées de fréquence.

3. Procédé selon la revendication 1,
caractérisé par le fait que l'on effectue une transformation de format des valeurs propres ($\omega_k$, $\lambda_k$) dans laquelle, pour l'estimation des directions ($\theta_k$, $\Phi_k$) d'incidence des signaux à évaluer, on détermine, séparément pour chaque direction d'extension, représentant la direction x, y d'analyse du procédé, du groupe de capteurs constitué de M éléments, les directions ($\theta_k$, $\Phi_k$) d'incidence des signaux échantillonnés avec une longueur de fenêtre de N valeurs mesurées à partir des valeurs propres ($\omega_k$, $\lambda_k$) de la matrice ($\Omega$, $\Lambda$) de valeurs propres.

4. Procédé selon la revendication 2,

caractérisé par le fait que l'on effectue une transformation de format des valeurs propres ($\omega_k$, $\lambda_k$) dans laquelle, pour l'estimation de fréquence des signaux échantillonnés avec une longueur de fenêtre de N valeurs mesurées par l'intermédiaire d'un groupe de capteurs constitué de M éléments et non atténués pendant une longueur de fenêtre, on détermine les fréquences harmoniques ($\mu_k$, $\nu_k$) des signaux à évaluer.

5. Procédé selon l'une des revendications 1 à 4,

caractérisé par le fait que l'on prévoit une détermination des d valeurs propres ou singulières dominantes, représentant les composantes dominantes ($x_k$) de signaux par la sélection des valeurs propres ou singulières qui se trouvent au-dessus d'une valeur de seuil représentant une grande différence de puissance.

6. Procédé selon l'une des revendications précédentes,

caractérisé par le fait que l'on effectue une reconstitution des composantes ($x_k$) de signaux en multipliant une matrice pseudo-réciproque de la matrice ($\hat{A}$) de système estimée, contenant les facteurs ($e^{j\mu k}$, $e^{j\mu \nu}$) de phase des valeurs propres déterminées, par la matrice complexe ($\breve{x}$) de valeurs mesurées.

7. Procédé selon l'une des revendications précédentes,

caractérisé par le fait que, pour déterminer la matrice ($\mathbf{E_S}$) de sous-espaces de signaux déduite de la deuxième matrice entièrement réelle $\mathbf{(T(\breve{x}))}$, on choisit un procédé connu de décomposition en valeurs propres de la matrice $\mathbf{(T(\breve{x})T(\breve{x})^H)}$ de covariance estimée.

8. Procédé selon l'une des revendications 1 à 6,

caractérisé par le fait que, pour déterminer la matrice ($\mathbf{E_S}$) de sous-espaces de signaux déduite de la deuxième matrice entièrement réelle $\mathbf{(T(\breve{x}))}$, on choisit un procédé connu de décomposition en valeurs singulières de la deuxième matrice entièrement réelle $\mathbf{(T(\breve{x}))}$.

9. Procédé selon l'une des revendications 1 à 6,

caractérisé par le fait que, pour déterminer la matrice ($\mathbf{E_S}$) de sous-espaces de signaux déduite de la deuxième matrice entièrement réelle $\mathbf{(T(\breve{x}))}$, on choisit une méthode d'estimation de sous-espaces de signaux par coupe.

10. Procédé selon l'une des revendications 2, 4 à 9,

caractérisé par le fait que le groupe de capteurs unidimensionnel est constitué de M éléments et le procédé comporte une seule dimension x d'analyse.

11. Procédé selon la revendication 10,

caractérisé par une estimation de fiabilité au moyen d'un test des valeurs propres ($\omega_k$) de la matrice ($\mathbf{Y}$) de solution pour détecter des solutions non réelles.

12. Procédé selon l'une des revendications 1 à 9,

caractérisé par le fait que le groupe de capteurs bidimensionnel, plan, à centre de symétrie et invariable dans deux directions, est constitué de M éléments et le procédé comporte les dimensions x et y d'analyse et que

- on détermine les matrices ($\mathbf{K_{\mu 1}}$, $\mathbf{K_{\mu 2}}$, $\mathbf{K_{\nu 1}}$, $\mathbf{K_{\nu 2}}$) de sélection selon les deux dimensions x, y du groupe de capteurs,
- on effectue la résolution du système d'équations, donné par la matrice ($\mathbf{E_S}$) de sous-espaces de signaux déduite de la formation de sous-groupes de signaux et par les matrices ($\mathbf{K_1}$, $\mathbf{K_2}$) de sélection, suivant les dimensions x, y et selon les relations $\mathbf{K_{\mu,\nu 1}E_S Y_{\mu,\nu} \approx K_{\mu,\nu 2}E_S}$ de manière à disposer à chaque fois d'une matrice ($\mathbf{Y_\mu}$, $\mathbf{Y_\nu}$) de solution selon $\mathbf{K_1 E_S Y \approx K_2 E_S}$,
- on effectue l'association des valeurs propres ($\lambda_k$) des matrices ($\mathbf{Y_\mu}$, $\mathbf{Y_\nu}$) de solution par l'intermédiaire d'une détermination complexe de la matrice complexe ($\Lambda$) de valeurs propres selon la relation $\mathbf{Y_\mu + jY_\nu = T\Lambda T^{-1}}$ et
- on détermine les directions d'incidence représentées par l'angle ($\theta_k$) d'azimut et l'angle ($\Phi_k$) d'élévation avec les relations $\omega_{\mu k} = \tan(\mu_k/2)$, $\omega_{\nu k} = \tan(\nu_k/2)$, $u_k = \cos\Phi_k \sin\theta_k$, $v_k = \sin\Phi_k \sin\theta_k$, $\mu_k = 2\pi/\lambda \cdot \Delta_x u_k$, $\nu_k = 2\pi/\lambda \cdot \Delta_y v_k$.

13. Procédé selon l'une des revendications 1 à 12,

caractérisé par le fait que, avant l'initialisation de la matrice complexe ($\breve{x}$) de valeurs mesurées, on effectue un lissage spatial des valeurs mesurées.

14. Procédé selon l'une des revendications 1 à 13,

caractérisé par le fait que, lors de la formation de sous-groupes, on met en oeuvre le plus grand chevauchement possible des éléments de sous-groupes.

15. Procédé selon l'une des revendications 1 à 14,
caractérisé par le fait que les capteurs conçus comme des antennes conviennent à la réception, et éventuellement à l'émission, de signaux électromagnétiques haute fréquence

16. Procédé selon la revendication 15,
caractérisé par son utilisation dans des systèmes de radiocommunication mobile.

17. Procédé selon la revendication 15,
caractérisé par son utilisation dans des systèmes de communication sans fil.

18. Procédé selon la revendication 15,
caractérisé par son utilisation dans des systèmes de traitement d'images de radar à haute définition.

19. Procédé selon l'une des revendications 1 à 14,
caractérisé par le fait que les capteurs conçus comme des récepteurs électro-acoustiques conviennent à l'émission et à la réception de signaux acoustiques.

20. Procédé selon la revendication 19,
caractérisé par son utilisation dans des systèmes de sonar.

21. Procédé selon la revendication 19,
caractérisé par son utilisation dans des systèmes techniques médicaux.

FIG 1

# FIG 2

**a)**

Untergruppe 1   m = 5

Untergruppe 2   M = 6

Δ

**b)**

Untergruppe 1   m = 3

Untergruppe 2   M = 6

**c)**

Untergruppe 1   m = 4

Untergruppe 2   M = 6

**d)**

y

x

**e)**

UGµ1

UGµ2

UGµ1   UGµ2

$\Delta_x$

$\Delta_y$

# FIG 3

# FIG 4

**Standard ESPRIT**

a)

**Unitary ESPRIT**

b)

| M | 6 |
|---|---|
| N | 20 |
| SNR | 0 dB |
| Testläufe | 80 |

$\Theta_1 = -20°$
$\Theta_2 = 0°$
$\Theta_3 = 20°$
$\rho = 0.8$

$$R = \begin{bmatrix} 1 & \rho & \rho \\ \rho & 1 & \rho^2 \\ \rho & \rho^2 & 1 \end{bmatrix}$$

# FIG 5